## Europäisches Patentamt

## European Patent Office

## Office européen des brevets

(11) Numéro de publication: **0 194 186 B1**

## (12) FASCICULE DE BREVET EUROPEEN

(45) Date de publication du fascicule du brevet:
06.12.89

(51) Int. Cl.⁴: **H04M 11/06, H04K 1/06**

(21) Numéro de dépôt: 86400339.7

(22) Date de dépôt: 18.02.86

(54) Procédé de transmission de données par insertion dans un signal vocal analogique et dispositifs pour la mise en oeuvre de ce procédé.

(30) Priorité: 22.02.85 FR 8502590

(43) Date de publication de la demande:
10.09.86 Bulletin 86/37

(45) Mention de la délivrance du brevet:
06.12.89 Bulletin 89/49

(84) Etats contractants désignés:
CH DE GB IT LI

(56) Documents cités:
EP-A- 0 112 158
EP-A- 0 112 697
DE-A- 2 834 280
FR-A- 2 321 805
FR-A- 2 541 060
US-A- 4 149 039

(73) Titulaire: THOMSON-CSF, 51, Esplanade du Général de Gaulle, F-92800 Puteaux(FR)

(72) Inventeur: Quere, Michel, THOMSON-CSF
SCPI 19, Avenue de Messine, F-75008 Paris(FR)
Inventeur: Leroy, Jacques, THOMSON-CSF
SCPI 19, Avenue de Messine, F-75008 Paris(FR)
Inventeur: Chanteau, Dominique, THOMSON-CSF
SCPI 19, Avenue de Messine, F-75008 Paris(FR)

(74) Mandataire: Turlèque, Clotilde et al, THOMSON-CSF
SCPI, F-92045 PARIS LA DEFENSE CEDEX 67(FR)

ACTORUM AG

## Description

L'invention concerne un procédé de transmission de données par insertion dans un signal vocal analogique, pour transmettre, sur une même voie, des données et un signal vocal sans que l'auditeur du signal vocal perçoive une altération de ce signal et sans que la bande passante occupée par ce signal soit élargie. Ce procédé peut être appliqué notamment à la transmission périodique d'une séquence de données de synchronisation pour une liaison cryptophonique, c'est-à-dire transmettant un signal vocal chiffré. L'invention concerne aussi des dispositifs pour la mise en œuvre de ce procédé.

Dans le domaine des transmissions analogiques il existe trois procédés connus pour transmettre des données en même temps qu'un signal vocal:

Un premier procédé consiste à supprimer une partie du spectre du signal vocal et à attribuer cette partie du spectre à une sous-porteuse permanente modulée par les données. Cette sous-porteuse est rendue imperceptible à l'auditeur grâce à un dispositif de filtrage séparant la bande réservée au signal vocal et la bande réservée à la transmission de données.

Un second procédé connu consiste à regrouper les données par paquets, d'une durée de l'ordre de 100 à 200 ms, et à supprimer le signal vocal périodiquement pendant une durée égale à celle d'un paquet pour transmettre un paquet de données par une porteuse modulée. Pendant chaque suppression du signal vocal l'auditeur perçoit un silence qui nuit à la compréhension du signal vocal, car la durée de chaque paquet de données est relativement longue.

La demande de brevet EP 0 112 697 décrit un procédé consistant à supprimer périodiquement la transmission du signal vocal, pour transmettre, à sa place, un bit de données, sous la forme d'un ou plusieurs cycles d'un signal à basse fréquence, qui est modulé en phase ou en fréquence pour traduire la valeur 0 ou 1 du bit. Pour éviter que l'interruption du signal vocal soit gênante, le nombre de bits transmis à chaque interruption est limité à un bit ou à quelques bits seulement. Or, il n'est pas toujours possible de raccourcir les paquets données car certaines applications, comme la transmission de données de synchronisation pour une liaison cryptophonique, ne permettent pas de répartir les données en paquets plus nombreux et plus courts.

Un troisième procédé connu consiste à comprimer les informations constituant le signal vocal de façon à les transmettre toutes pendant les intervalles de temps séparant les paquets de données. Après la transmission, ces informations sont décomprimées et ne présentent pas de discontinuité. Ce procédé rend l'insertion des données imperceptible à l'auditeur mais il présente l'inconvénient d'élargir la bande de fréquence occupée par le signal vocal. Cet inconvénient est important lorsque le signal vocal doit être transmis par une voie dont la bande passante est très limitée.

Selon l'invention un procédé de transmission de données par insertion dans un signal vocal analogique, les données à transmettre étant groupées en paquets de durée t ayant une période T, consistant à:

– découper le signal vocal en segments de durée L fixée;
– raccourcir chaque segment en supprimant le signal vocal pendant une durée

$$p = \frac{t}{N},$$

N étant un nombre entier tel que p est suffisamment petite pour qu'une interruption du signal vocal pendant une durée p soit peu gênante à l'écoute et la durée L étant telle que:
N.(L–p) = T–t;
est caractérisé en ce qu'il consiste, en outre, à:
– transmettre les paquets de données en conservant leur durée t et leur période T;
– entre les paquets de données, transmettre bout à bout N segments raccourcis de signal vocal;
– recevoir puis séparer les données et les segments raccourcis du signal vocal;
– restituer un signal vocal en prolongeant chaque segment raccourci d'une durée p.

Le but de l'invention est de transmettre des données sans créer d'interruptions perceptibles dans le signal vocal restitué et sans augmenter la largeur de la bande de fréquence occupée. Il tire partie du fait que des interruptions du signal vocal sont imperceptibles, même si elles sont très nombreuses, à condition d'être de très faible durée, et il consiste à regrouper les intervalles de temps ainsi gagnés pour constituer des intervalles de temps de durée relativement longue et suffisante pour transmettre un paquet de données.

L'invention sera mieux comprise et d'autres détails apparaîtront à l'aide de la description ci-dessous et des figures l'accompagnant :

- la figure 1 illustre le procédé selon l'invention ;
- la figure 2 représente le schéma synoptique d'un exemple de réalisation d'un dispositif numérique de cryptophonie, comportant un dispositif selon l'invention pour insérer ou extraire des données de synchronisation dans un signal vocal analogique ;
- la figure 3 représente le schéma synoptique d'un exemple de réalisation d'un dispositif analogique de cryptophonie comportant un dispositif selon l'invention pour insérer ou extraire des données de synchronisation dans un signal vocal analogique.

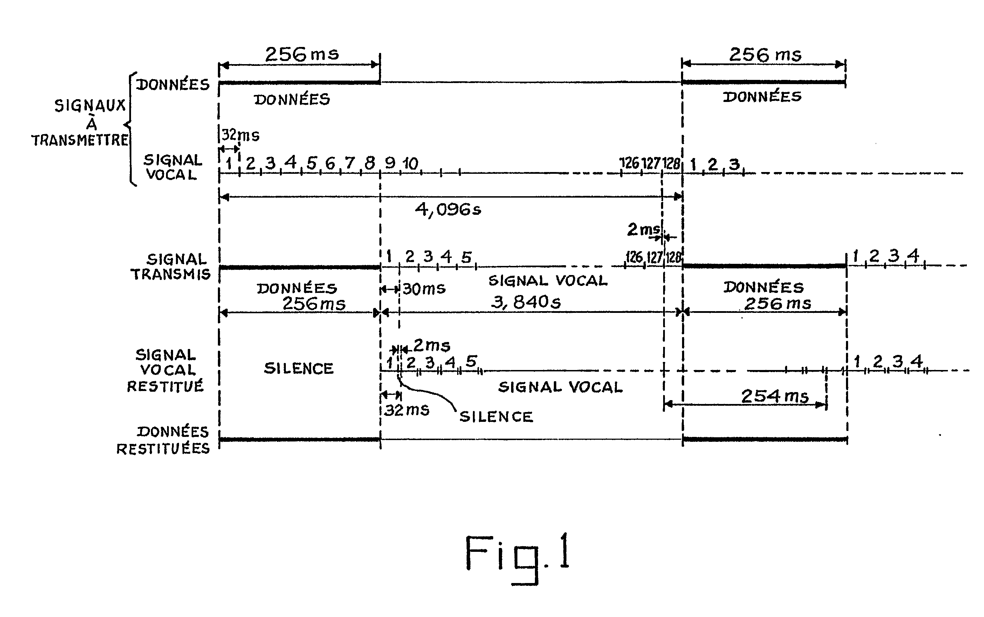

La figure 1 représente des diagrammes temporels de signaux à transmettre, d'un signal transmis, et des signaux restitués, dans un exemple d'application du procédé selon l'invention. Les données sont, par exemple, des données de synchronisation qui sont transmises par paquets de durée 256 ms et avec une période de 4,096 s, au moyen d'une porteuse à basse fréquence modulée par un déplacement de fréquence. Dans cet exemple, la période de transmission des données de synchronisation, 4,096 s, détermine la durée de chaque trame du signal transmis qui est un signal composite constitué d'un signal vocal dans lequel sont insérées les données.

Chaque tranche de 4,096 s du signal vocal est découpée en 128 segments de 32 millisecondes. Le signal transmis est constitué de trames ayant une période et une durée de 4,096 s. Au début de chaque trame un paquet de données est transmis au fur et à mesure de son arrivée, pendant une durée de 256 ms. Ensuite, le signal vocal est transmis sous la forme de 128 segments raccourcis dont la durée est de 30 ms, la fin de chaque segment étant raccourcie en supprimant le signal vocal pendant 2 ms. La transmission des 128 segments raccourcis du signal vocal est effectuée bout à bout et dure ainsi 3,840 s.

A la réception, le procédé consiste à restituer les données au fur et à mesure qu'elles sont reçues, c'est-à-dire pendant une durée de 256 ms toutes les 4,096 s. Pendant les 256 premières millisecondes de la liaison il n'y a pas de signal vocal restitué, mais ce retard n'est pas gênant en pratique. Ensuite le signal vocal est restitué sous la forme de 128 segments de durée 32 ms, chaque segment étant constitué d'un segment raccourci effectivement transmis et de durée 30 ms, et d'un silence de durée 2 ms.

Pendant les 256 dernières millisecondes de la restitution de ces 128 segments de signal vocal, un second paquet de données est transmis et restitué immédiatement, en parallèle avec la restitution du signal vocal. La fin de la restitution du 128ème segment de signal vocal coïncide avec la fin de la transmission et de la restitution du second paquet de données. La transmission et la restitution d'un autre ensemble de 128 segments raccourcis commence alors.

La période T des trames de signal transmis est égale à la période T des données à transmettre car celles-ci ne sont pas stockées. La durée t de chaque paquet de données détermine la durée totale t à amputer dans les N segments de signal vocal transmis dans chaque trame. La valeur de N est déterminée en fonction de la durée L de chaque segment et de la durée p amputée sur chaque segment. La durée L de chaque segment est choisie en fonction de l'application considérée. Dans l'application à une transmission cryptophonique par radio, la synchronisation entre l'émetteur et le récepteur ayant une précision de l'ordre de 1 ou 2 ms les segments doivent donc avoir une durée très supérieure à cette imprécision pour éviter de fortes perturbations du signal vocal.

La durée p du silence séparant chaque segment restitué est égale à 2 ms dans cet exemple, mais peut être inférieure si chaque paquet d'informations peut être transmis pendant une durée inférieure à 256 ms, ou bien elle peut être supérieure si on admet une dégradation de la qualité du signal vocal restitué. Dans un autre exemple de mise en oeuvre du procédé selon l'invention, la durée L des segments peut être de 5 ms et la durée p de la partie supprimée peut être de 1 ms, ou bien la durée de chaque segment peut être de 1 ms et la durée de la partie supprimée peut être alors de 0,1 ms.

La valeur de N est une valeur entière telle que

$$p = \frac{t}{N},$$

donc elle doit être choisie suffisamment grande pour que la durée p de suppression du signal vocal ne soit pas gênante à l'écoute. D'autre part, l'intervalle de durée T - t séparant deux paquets de données consécutifs doit être rempli au maximum par les segments raccourcis de signal vocal donc N doit être tel que:

N.(L−p) = T−t

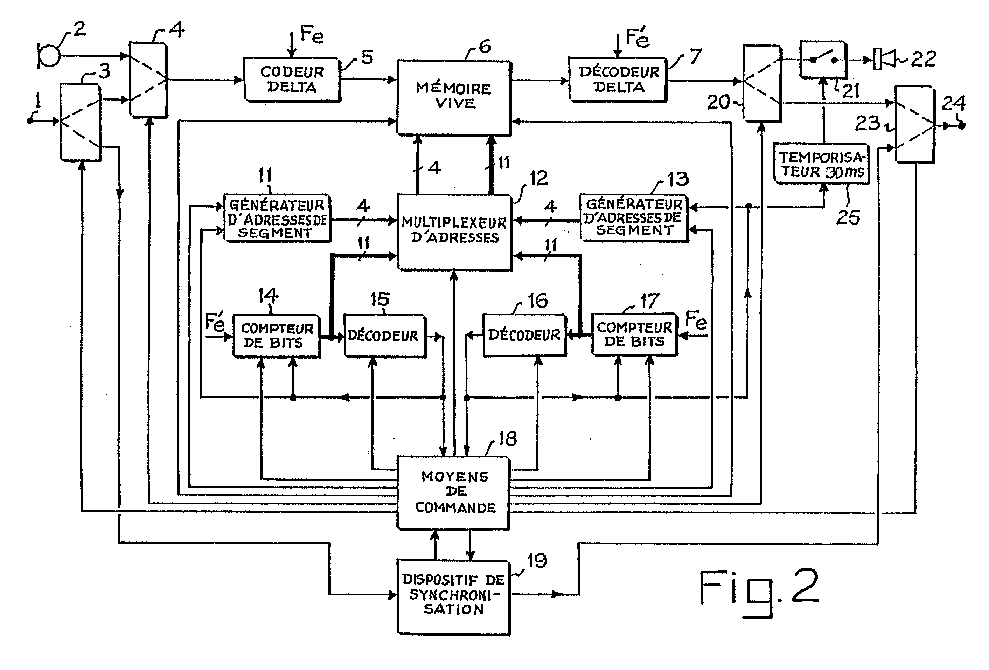

La figure 2 représente le schéma synoptique d'un exemple de réalisation d'un dispositif numérique de cryptophonie, réalisant le chiffrement ou le déchiffrement d'un signal vocal et comportant un dispositif selon l'invention pour insérer des paquets de données de synchronisation dans un signal vocal analogique chiffré ou pour extraire des données de synchronisation et un signal vocal à partir d'un signal reçu constitué d'un signal vocal chiffré dans lequel ont été insérées des données. Le signal vocal est chiffré par une permutation temporelle pseudo-aléatoire de segments de ce signal. Les données sont utilisées pour la synchronisation du chiffrement et du déchiffrement. La réalisation de la permutation temporelle nécessite de retarder le signal vocal à l'émission et à la réception. Dans cet exemple de réalisation, la somme du retard à l'émission et du retard à la réception est de 512 ms qui s'ajoutent aux 256 ms du retard dû à l'insertion de données.

Cet exemple de réalisation comporte: une borne d'entrée 1 pour recevoir un signal vocal chiffré dans lerquel sont insérés des paquets de données de synchronisation; un microphone 2 pour capter un signal vocal à transmettre; un écouteur 22 pour restituer un signal vocal, une borne de sortie 24 pour émettre sur une ligne de transmission un signal vocal chiffré dans lequel sont insérées des données de synchronisation. Ce dispositif peut être utilisé alternativement pour émettre ou recevoir un signal vocal chiffré.

Cet exemple de réalisation comporte en outre: deux multiplexeurs analogiques, à deux entrées et une sortie, 4 et 23; deux démultiplexeurs analogiques à une entrée et deux sorties, 3 et 20; un codeur delta 5; une mémoire vive 6; un décodeur delta 7; un interrupteur analogique 21; deux générateurs d'adresses de segments, 11 et 13; un multiplexeur d'adresses 12; deux compteurs de bits, 14 et 17; deux décodeurs, 15 et 16 ; des moyens de commande 18 ; un dispositif de synchronisation 19 ; et un temporisateur 25.

La borne d'entrée 1 est reliée à une entrée du démultiplexeur 3 qui possède une première sortie reliée à une première entrée du multiplexeur 4 et une seconde sortie reliée à une entrée du dispositif de synchronisation 19. Une seconde entrée du multiplexeur 4 est reliée au microphone 2 et une sortie du multiplexeur 4 est reliée à une entrée du codeur delta 5. Une sortie du codeur delta 5 est reliée à une entrée de données de la mémoire vive 6. Une sortie de données de la mémoire vive 6 est reliée à une entrée du décodeur delta 7 et une sortie de ce dernier est reliée à une entrée du démultiplexeur 20. Une première et une seconde sortie du démultiplexeur 20 sont reliées respectivement à une entrée de l'interrupteur 21 et à une première entrée du multiplexeur 23. Une seconde entrée du multiplexeur 23 est reliée à une sortie du dispositif de synchronisation 19 et une sortie du multiplexeur 23 est reliée à la borne de sortie 24. Une sortie de l'interrupteur 21 est reliée à l'écouteur 22.

La mémoire 6 possède une entrée d'adresse de poids fort et une entrée d'adresse de poids faible, reliées respectivement à une première et une seconde sortie multiple du multiplexeur d'adresses 12, fournissant respectivement un mot binaire de quatre bits constituant une mémoire de segment et un mot binaire de 11 bits constituant une adresse de bit à l'intérieur de la zone mémoire correspondant à une mémoire de segment. Dans cet exemple de réalisation, la mémoire 6 a une capacité permettant de stocker un nombre $n = 16$ de segments, codés chacun sur un nombre $B = 2048$ de bits par un codage delta. Une capacité de 8 segments est nécessaire pour l'insertion et l'extraction de données, et une capacité supplémentaire de 8 segments est nécessaire pour procurer les retards nécessaires à la permutation temporelle. La capacité totale de la mémoire 6 est donc de 32 kilobits.

Le multiplexeur 12 possède une première et une seconde entrée multiple reliées respectivement à une sortie du générateur 11 et à une sortie du générateur 13 pour recevoir respectivement deux mots binaires de quatre bits qui sont transmis alternativement vers la première sortie du multiplexeur 12 en fonction d'un signal logique de commande appliqué à une entrée de commande du multiplexeur 12. Le multiplexeur 12 possède en outre une troisième et une quatrième entrée multiple reliées respectivement à une sortie du compteur 14 et à une sortie du compteur 17 pour recevoir respectivement deux mots binaires de 11 bits et les transmettre alternativement vers la seconde sortie du multiplexeur 12 en fonction du signal de commande.

Le générateur 11 et le compteur 14 fournissent respectivement la valeur d'une adresse de segment et une adresse de bit pour écrire dans la mémoire 6. Le générateur 13 et le compteur 17 fournissent respectivement une adresse de segment et une adresse de bit pour lire dans la mémoire 6. La sortie du compteur 14 et la sortie du compteur 17 sont reliées respectivement à une entrée du décodeur 15 et à une entrée du décodeur 16. Le décodeur 15 possède une sortie reliée : à une entrée des moyens de commande 18, à une entrée de remise à zéro du compteur 14, et à une entrée d'horloge du générateur 11. Le décodeur 16 possède une sortie reliée : à une entrée des moyens de commande 18, à une entrée de remise à zéro du compteur 17, à une entrée d'horloge du générateur 13, et à une entrée de commande du temporisateur 25. Une sortie de ce dernier est reliée à une entrée de commande de l'interrupteur 21.

Les moyens de commande 18 possèdent : une entrée et une sortie reliées respectivement à une sortie et à une entrée du dispositif de synchronisation 19 ; et des sorties reliées respectivement à des entrées de commande : des multiplexeurs 4 et 23, des démultiplexeurs 3 et 20, des décodeurs 15 et 16, des générateurs 11 et 13, et des compteurs 14 et 17, et reliées à une entrée de commande de lecture et à une entrée de commande d'écriture de la mémoire vive 6. Les moyens de commande 18 génèrent d'autre part un premier signal d'horloge noté $F_e$ qui fixe la fréquence d'échantillonage $f_e$ de l'échantillonnage du signal vocal et qui est appliqué à des entrées d'horloge du codeur 5 et du compteur 17, et un second signal d'horloge noté $F'_e$ qui a la même fréquence que $F_e$, $f_e = 64$ KHz, mais en opposition de phase, et qui est appliqué à des entrées d'horloge du décodeur 7 et du compteur 14.

Lorsque ce dispositif est utilisé en émission le multiplexeur 4 relie le microphone 2 à l'entrée du codeur 5 et le démultiplexeur 20 relie la sortie du décodeur 7 à la première entrée du multiplexeur 23. Le signal vocal est échantillonné à une fréquence d'échantillonnage $f_e = 64$ KHz et est converti en une suite de valeurs binaires codée selon le codage delta, c'est-à-dire que chaque bit traduit une augmentation ou une diminution d'une unité. Toutes ces valeurs binaires sont stockées pendant un certain temps dans la mémoire vive 6 puis sont relues et appliquées au décodeur delta 7 pour restituer un signal analogique qui est transmis par le démultiplexeur 20 et par le multiplexeur 23 jusqu'à la borne de sortie 24.

Les moyens de commande 18 commandent alternativement l'écriture et la lecture d'un bit avec une fréquence de 64 KHz, à une adresse d'écriture et à une adresse de lecture différentes fournies respectivement par le générateur 11 d'adresses de segments et le compteur de bits 14, d'une part, et, d'autre part, par le générateur 13 d'adresses de segments et par le compteur de bits 17.

Le décodeur 15 reçoit un signal logique fourni par les moyens de commande 18 pour lui indiquer qu'il doit décoder la valeur $B - 1 = 2047$ qui est l'adresse du $2048^{ième}$ et dernier bit de chaque segment. Quand le décodeur 15 détecte la valeur 2047 il fournit un signal logique qui remet à zéro le compteur 14 et qui provoque une modification de l'adresse fournie par le générateur 11. Pour chaque écriture d'un bit les moyens de commande 18 fournissent un signal de validation au compteur 14 pour permettre l'incrémentation de l'adresse d'écriture, de poids faible, sous l'action du signal d'horloge $F'_e$; et ils fournissent un signal de commande d'écriture à la mémoire 6.

Pendant l'écriture des bits correspondants aux huit premiers segments de signal vocal, c'est-à-dire pendant 256 ms, il n'y a pas de lecture dans la mémoire 6. La lecture commence pendant l'écriture du neuvième segment. Le décodeur 16 reçoit un signal de commande lui indiquant qu'il doit décoder une valeur $B-1 - b = 2047 - 128 = 1979$, qui est l'adresse du dernier bit de chaque segment raccourci, chaque segment étant raccourci d'un nombre $b = 128$ de bits. Quand le décodeur 16 détecte la valeur 1979 il envoie un signal logique aux moyens de commande 18, à l'entrée de remise à zéro du compteur de bits 17, à l'entrée d'horloge du générateur d'adresses de segments 13, et à l'entrée du temporisateur 25. Pour chaque lecture d'un bit, à la fréquence de 64 KHz, les moyens de commande 18 fournissent un signal de validation au compteur 17 pour permettre l'incrémentation de l'adresse de lecture de poids faible, sous l'action du signal d'horloge $F_e$; et ils fournissent un signal de commande de lecture à la mémoire 6. La lecture des bits est réalisée au même rythme que leur écriture mais les 128 derniers bits de chaque segment ne sont pas lus dans la mémoire 6.

La lecture du premier bit de chaque segment est réalisée immédiatement après la lecture du 1980$^{ième}$ bit du segment précédent, pour transmettre bout à bout les segments raccourcis. Le générateur 11 reçoit un signal logique fourni par les moyens 18 et lui indiquant que le dispositif fonctionne en émission. Le générateur 11 fournit alors une première suite de 128 adresses de segment, choisies parmi 0 à 15. Le générateur 13 reçoit, lui aussi, un signal logique indiquant le fonctionnement en émission. Il fournit alors, pour la lecture, une seconde suite de 128 adresses de segment choisies parmi 0 à 15 et réalisant des permutations dans l'ordre des segments transmis, pour rendre le signal vocal inintelligible. La première et la seconde suite d'adresses sont liées par une relation qui détermine une permutation temporelle pseudo-aléatoire des segments.

La durée de lecture de chaque segment raccourci est égale à

$$(B - b) \times \frac{1}{f_e} = 30 \text{ ms}$$

alors que la durée d'écriture de chaque segment est égale à

$$\frac{B}{f_e} = 32 \text{ ms.}$$

La lecture de 128 segments raccourcis dure donc 256 ms de moins que l'écriture des 128 segments entiers. La mémoire 6 a une capacité de stockage de 16 segments permettant de commencer l'écriture avec une avance de 512 ms par rapport à la lecture. Cette durée de stockage permet de retarder tous les segments de 256 ms pour l'insertion de données, et permet de les retarder d'une durée variable pseudo-aléatoire, comprise entre 0 et 256 ms, pour la permutation temporelle. Elle constitue un réservoir qui se remplit moins vite qu'il ne se vide. A la fin de la transmission de 128 segments elle est complètement vide. La lecture est arrêtée pendant 256 ms pour transmettre un paquets de données. La réalisation des générateurs 11 et 13 n'est pas décrite car elle est classique dans le domaine de la cryptologie.

Les moyens de commande 18 sont synchronisés par le dispositif de synchronisation 19. Toutes les 4,096 secondes ils commandent le multiplexeur 23 pendant une durée de 256 ms afin d'aiguiller vers la borne de sortie 24 un paquet de données de synchronisation émis par le dispositif 19.

Lorsque ce dispositif est utilisé en réception, le multiplexeur 4 est commandé par les moyens de commande 18 afin de transmettre au codeur 5 les signaux vocaux constitués de segments raccourcis, reçus par la borne 1 et transmis par la première sortie du démultiplexeur 3. Les segments raccourcis de signal vocal sont convertis en une suite de 1980 bits par segment raccourci, au moyen du codeur delta 5. Ces bits sont stockés dans la mémoire 6. La mémoire 6 est initialement vide. Les 128 segments d'une trame sont inscrits sans interruption pendant une durée totale N.(L–p) = 3,840 s et ils sont lus en une durée totale: N.L = 4,096 s. La mémoire 6 est donc remplie plus rapidement qu'elle n'est vidée. Elle contient 8 segments à la fin de la transmission du 128$^{ième}$ segment. L'écriture est alors arrêtée. La lecture continue et va restituer le 128$^{ième}$ segment avec un retard:

$$n \times L = 8 \times 32 \text{ ms} = 256 \text{ ms}$$

permettant de transmettre un paquet de données. A la fin de la transmission du paquet de données, la mémoire 6 est vide, et le cycle recommence, l'écriture redémarre.

Les moyens de commande 18 fournissent un signal de commande d'écriture à la mémoire 6 et un signal de validation au compteur 14 pour l'écriture de chacun de ces bits. Les moyens 18 fournissent un signal de commande au décodeur 15 pour lui indiquer qu'il doit décoder la valeur 1979. Quand le décodeur 15 détecte la valeur 1979 il commande la remise à zéro du compteur de bits 14 et le changement de l'adresse de segment fournie par le générateur 11. Le générateur 11 reçoit un signal logique fourni par les moyens 18 et lui indiquant que le dispositif fonctionne en réception. Le générateur 11 fournit alors une troisième suite de 128 adresses de segment comprise entre 0 et 15.

Dès que le premier segment raccourci a commencé à être stocké dans la mémoire 6, les moyens de commande 18 commandent une lecture des bits correspondants à ce segment. L'écriture et la lecture des bits dans la mémoire 6 sont réalisée alternativement, à la fréquence de 64 KHz sous l'action des signaux d'horloge $F_e$ et $F'_e$.

Les moyens de commande 18 fournissent un signal logique de validation du compteur 17, un signal de commande de lecture à la mémoire 6, et un signal de commande du décodeur 16 pour qu'il décode la valeur 2047. Lorsque le décodeur 16 détecte la valeur 2047 il fournit un signal logique remettant à zéro le compteur 17, provoquant un changement de l'adresse fournie par le générateur 13, et fermant l'interrupteur 21 par l'intermédiaire du temporisateur 25. Le temporisateur 25 ferme l'interrupteur 21 pendant 30 ms pour qu'il transmette le signal vocal décodé correspondant à un segment raccourci de durée 30 ms, puis il bloque l'interrupteur 21 en attendant le début du prochain segment raccourci. Ainsi il maintient le blocage pendant 2 ms afin d'empêcher la transmission vers l'écouteur d'un signal sonore aléatoire correspondant aux 128 derniers bits lus dans la mémoire 6 à la fin de chaque segment. Ces 128 derniers bits correspondent à des données qui sont éventuellement restées stockées dans la mémoire 6 mais qui ne correspondent pas aux segments en cours de lecture, puis que ceux-ci ne comportent que 1980 bits.

Le générateur 13 reçoit un signal logique fourni par les moyens 18 et lui indiquant que le dispositif fonctionne en réception. Le générateur 13 fournit alors une quatrième suite de 128 adresses de segment comprises entre 0 et 15, ces adresses permettent de lire les segments raccourcis dans leur ordre original, car les troisième et quatrième suite d'adresses sont liées à la première suite et à la seconde suite par une relation telle que la permutation temporelle pseudo-aléatoire des segments est neutralisée.

Toutes les 4,096 secondes, les moyens 18 commandent le démultiplexeur 3 pour aiguiller vers le dispositif 19 les données de synchronisation insérées dans le signal reçu sur la borne d'entrée 1. La synchronisation des suites d'adresses de numéros de segment est assurée par le dispositif 19. Ce dernier synchronise les générateurs 11 et 13 par l'intermédiaire des moyens de commande 18. La réalisation de générateurs 11 et 13 permettant de rétablir l'ordre des segments n'est pas décrite plus en détails car elle est courante dans le domaine de la cryptologie.

De nombreuses variantes de ce dispositif numérique sont à la portée de l'homme de l'art, notamment en réalisant tous les moyens de commande d'écriture et de lecture dans la mémoire 6 au moyen d'un microprocesseur programmé pour réaliser les fonctions décrites ci-dessus.

Il est possible d'utiliser à la réception un dispositif ayant une fréquence d'échantillonnage $f_d$ différente de celle du dispositif d'émission. Le nombre $B'$ de bits par segment entier et le nombre $b'$ de bits supprimés vérifient les relations:

$$\frac{B'}{f_d} = L \text{ et } \frac{b'}{f_d} = p$$

Le nombre n de segments à stocker est inchangé; il doit vérifier la relation $n \times L = t$ qui est indépendante de la fréquence d'échantillonnage.

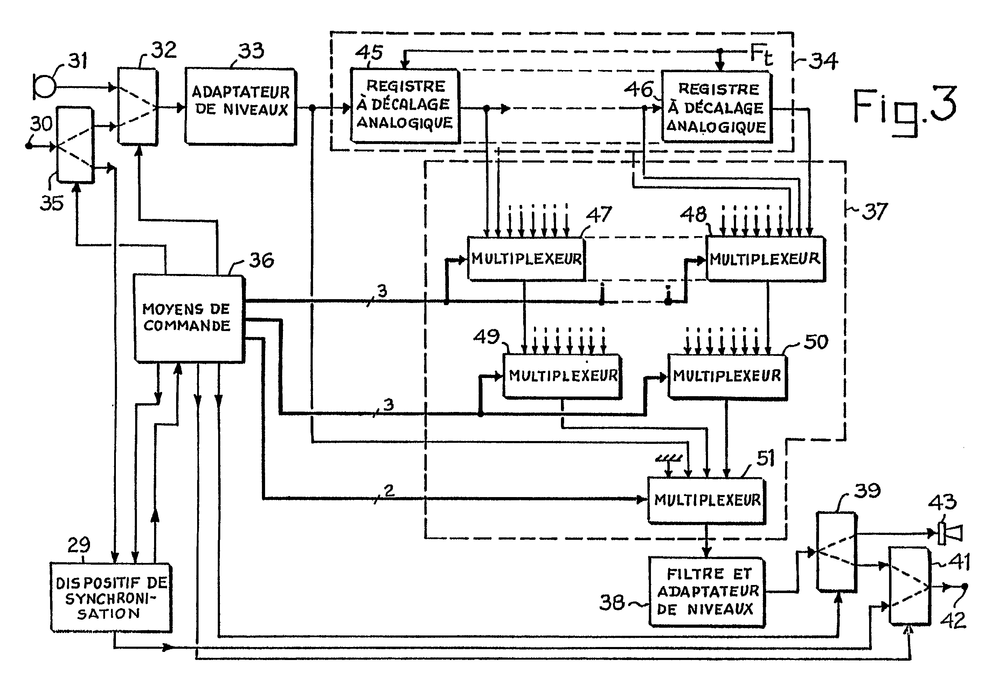

La figure 3 représente le schéma synoptique d'un exemple de réalisation d'un dispositif analogique de cryptophonie comportant un dispositif selon l'invention pour insérer ou extraire des données de synchronisation dans un signal vocal analogique. Le signal composite reçu ou émis par ce dispositif est identique à celui reçu ou émis par le dispositif décrit précédemment. Le dispositif diffère du dispositif précédent par le type de la mémoire utilisée qui est ici une mémoire analogique à transfert de charges.

Considérons la figure 1, dans le cas d'une émission d'un signal vocal non chiffrée, les retards appliqués à chaque segment de signal vocal avant de le transmettre ont respectivement pour valeur: 256 ms, 256–2 ms, 256–4 ms, ..., 256–127 × 2ms. Ces retards sont réalisés au moyen d'un registre à décalage analogique à 128 sorties et de moyens de multiplexage pour sélectionner successivement chacune de ces sorties pendant une durée de 30 ms et avec une période de 30 ms. Ces sorties fournissent le signal vocal avec des retards de 256 ms, 254 ms, 252 ms, ..., 2 ms. Il est possible en outre de chiffrer le signal vocal en sélectionnant les sorties non pas dans cet ordre mais dans un ordre pseudo-aléatoire.

Considérons la figure, dans le cas de la réception d'un signal vocal non chiffré: Le premier segment est restitué immédiatement, le second avec un retard de 2 ms par rapport à sa réception, le troisième avec un retard de 4 ms, ..., le 128ième avec un retard de 254 ms. Ces retards sont réalisables au moyen d'un registre à décalage analogique ayant au moins 127 sorties, procurant des retards croissants par pas de 2 ms, et de moyens de multiplexage pour sélectionner, successivement le signal non retardé appliqué à l'entrée de la mémoire puis celui fourni par chacune de ces sorties, pendant une durée de 30 ms mais avec une période de 32 ms. Durant les deux dernières millisecondes de chaque période le signal retardé restitué par la mémoire n'est pas transmis, il est remplacé par un signal nul qui constitue les 2 ms de silence prolongeant chaque segment raccourci.

Cet exemple de réalisation comporte : un microphone 31 ; deux multiplexeurs à deux entrées et une sortie, 32 et 41 ; deux démultiplexeurs à une entrée et deux sorties, 35 et 39 ; un dispositif adaptateur de niveaux 33 ; une mémoire analogique 34 ; des moyens de multiplexage 37 ; des moyens de commande 36 ; un dispositif de synchronisation 29 ; un filtre adaptateur de niveaux 38 ; et un écouteur 43. Lorsque ce dispositif est utilisé en émission, un signal vocal est reçu par le microphone 31 et un signal composite est restitué par une borne de sortie 42. Lorsque ce dispositif est utilisé en réception, un signal composite est appliqué à une borne d'entrée 30 et un signal vocal est restitué par l'écouteur 43.

La mémoire analogique 34 est constituée d'un nombre N = 128 de registres à décalage analogique, à transfert de charges, 45, ... , 46, reliés en série et recevant un signal d'horloge noté $F_t$ décalant les charges à une fréquence de 227,5 KHz. Chaque registre 45, ... , 46, procure un retard p = 2 ms, correspondant à la durée de suppression de chaque segment. L'ensemble des registres constituant la mémoire analogique 34 procure des retards de valeurs : 2, 4, 6, ... , 256 ms. La mémoire analogique 34 est constituée au moyen de circuits intégrés du type CCD 321A fabriqué par la société FAIRCHILD, chaque circuit intégré contenant deux registres indépendants procurant un retard de 455 périodes du signal d'horloge $F_t$.

Le multiplexeur 32 possède une seconde entrée reliée à une première sortie du démultiplexeur 35 et possède une sortie reliée à une entrée de l'adaptateur de niveaux 33. Ce dernier possède une sortie reliée à une entrée de la mémoire analogique 34 et à une première entrée des moyens de multiplexage 37. Le démultiplexeur 35 possède une entrée reliée à la borne d'entrée 30 et possède une seconde sortie reliée à une première entrée du dispositif de synchronisation 29.

La mémoire 34 possède 128 sorties, qui sont respectivement les 128 sorties série des registres 45, ... , 46, et qui sont reliées respectivement à 128 entrées des moyens de multiplexage 37. Les moyens de multiplexage 37 possèdent trois entrées multiples reliées respectivement à trois sorties des moyens de commande 36 et recevant respectivement un premier mot binaire de trois bits, un second mot binaire de trois bits, et un mot binaire de deux bits.

Les moyens 37 possèdent en outre une sortie reliée à une entrée du filtre et adaptateur de niveaux 38. Ce dernier possède une sortie reliée à une entrée du démultiplexeur 39. Le démultiplexeur 39 possède une seconde sortie reliée à une première entrée du multiplexeur 41. Le multiplexeur 41 possède une seconde entrée reliée à une sortie du dispositif 29 de synchronisation et possède une sortie reliée à la borne de sortie 42.

Les moyens de commande 36 possèdent quatre sorties reliées respectivement à des entrées de commande : du multiplexeur 32, du multiplexeur 41, du démultiplexeur 35, et du démultiplexeur 39. Les moyens de commande 36 possèdent en outre une entrée et une sortie reliées respectivement à une sortie et à une entrée du dispositif de synchronisation 29.

Les moyens de multiplexage 37 sont constitués de 18 multiplexeurs à huit entrées et une sortie : 47, ... , 48, 49, et 50 ; et d'un multiplexeur 51 à quatre entrées et une sortie. Les 128 entrées des 16 multiplexeurs 47, ... , 48 constituent les 128 secondes entrées des moyens 37, entrées qui sont reliées aux 128 sorties des registres à décalage analogique 45, ... , 46. Les multiplexeurs 47, ... , 48 possèdent au total seize sorties reliées respectivement à huit entrées du multiplexeur 49 et à huit entrées du multiplexeur 50. Les multiplexeurs 49 et 50 possèdent deux sorties reliées respectivement à deux premières entrées du multiplexeur 51.

Le multiplexeur 51 possède une troisième entrée constituant la première entrée des moyens 37 et reliée à la sortie de l'adaptateur de niveaux 33 et possède une quatrième entrée reliée en permanence au potentiel de référence du dispositif. Les multiplexeurs 47, ... , 48 ont des entrées de commande reliées en parallèle et recevant le premier mot binaire de trois bits reu par les secondes entrées des moyens 37. Les multiplexeurs 49 et 50 possèdent des entrées de commande reliées en parallèle et recevant le second mot binaire de trois bits reçu par les secondes entrées des moyens 37. Le multiplexeur 51 possède des entrées de commande recevant le mot binaire de deux bits reçus par les secondes entrées des moyens 37.

Les multiplexeurs 47, ... , 48, 49 à 51 permettent de sélectionner l'un des 128 signaux analogiques fournis par les sorties de la mémoire 34 et qui sont décalées de 2 ms successivement, ou bien le signal non retardé fourni par la sortie de l'adaptateur de niveaux 33, ou bien un signal de valeur nulle. Ces multiplexeurs peuvent être constitués chacun d'un circuit intégré du type HC 4051 fabriqué par la société FAIRCHILD et permettant de sélectionner un signal analogique parmi huit.

Considérons le fonctionnement de ce dispositif en réception, dans un cas où le signal vocal serait transmis sans chiffrement, c'est-à-dire si les segments étaient transmis dans l'ordre où ils ont été découpés. Comme cela est illustré par la figure 1, un paquet de données est restitué immédiatement au fur et à mesure de sa réception pendant une durée t = 256 ms, et le signal vocal commence à être restitué à l'instant même où il commence à être reçu.

La restitution du premier segment dure 32 ms alors que la transmission du premier segment raccourci ne dure que 30 ms. Par conséquent le second segment raccourci doit être retardé de 2 ms avant d'être restitué. Le troisième segment raccourci doit être retardé de 4 ms avant d'être restitué, etc... le 128ème segment doit être retardé de 254 ms avant d'être restitué. Le rôle des registres à décalage 45, ... , 46 est de fournir 127 retards croissant par pas de 2 ms, pour les 128 segments raccourcis de signal vocal constituant chaque trame de signal composite.

Le rôle des moyens de multiplexage 37 est de sélectionner d'abord le signal non retardé fourni par la sortie de l'adaptateur 33, pendant 30 ms, puis de sélectionner le signal de valeur nulle pendant une durée de 2 ms, puis de sélectionner le signal fourni par la sortie du registre 45 pendant une durée de 30 ms, puis de sélectionner le signal de valeur nulle pendant une durée de 2 ms, etc... enfin de sélectionner le signal fourni par la sortie du 127ème registre, 46, pendant une durée de 30 ms, puis de sélectionner le signal de valeur nulle pendant une durée de 2 ms. Ensuite le cycle recommence en sélectionnant le signal non retardé fourni par la sortie de l'adaptateur de niveaux 33.

Dans le cas où le signal vocal est chiffré par une permutation temporelle pseudo-aléatoire des segments raccourcis, les moyens de commande 36 fournissent des mots binaires de commande des moyens 37 de démultiplexage, qui sont une fonction pseudo-aléatoire du temps supprimant les permutations réalisées pour le chiffrement. Les moyens de commande 36 sont synchronisés par le dispositif de synchronisation 29 recevant les données de synchronisation insérées dans le signal vocal à l'émission et qui sont séparées des segments de signal vocal par le démultiplexeur 35 commandé par les moyens de commande 36 avec une période T = 4,096 s et pendant une durée t = 256 ms.

Le signal analogique fourni par la sortie des moyens de multiplexage 37 est filtré par le filtre et adaptateur de niveaux 38, pour obtenir un lissage des discontinuités engendrées par la mémoire 34 à décalage de charges et un lissage des parasites de commutation, puis le signal vocal restitué est transmis à l'écouteur 43 par le démultiplexeur 39.

Considérons maintenant le fonctionnement de ce dispositif en émission, dans un cas où le signal vocal ne serait pas chiffré, c'est-à-dire si les segments raccourcis de signal vocal étaient émis dans l'ordre où ils ont été découpés. Le microphone 31 fournit un signal analogique qui est transmis par le multiplexeur 32 et qui est adapté au niveau nécessaire pour le bon fonctionnement de la mémoire 34 au moyen de l'adaptateur de niveaux 33. Ce signal analogique est retardé dans les registres à décalage 45, ... , 46, de 2 ms par registre, comme pour la réception. Toutes les 4,096 secondes les moyens de commande 38 commandent le multiplexeur 41 pour qu'il transmettre à la borne de sortie 42, pendant une durée de 256 ms, un paquet de données de synchronisation fourni par le dispositif 29. Ensuite les moyens de multiplexage 37 transmettent pendant une durée de 30 ms le signal fourni par la sortie du 128ème registre, 46, qui correspond au premier segment de signal vocal retardé de 256 ms. Puis ils transmettent pendant une durée de 30 ms le signal vocal retardé fourni par la sortie du 127ème registre à décalage pendant une durée de 30 ms, etc.

Enfin ils transmettent pendant une durée de 30 ms le signal vocal retardé de 2 ms fourni par la première sortie de la mémoire 34 et qui correspond au 128ème segment raccourci de signal vocal. La transmission de la fin du 128ème segment raccourci, correspondant, comme cela est illustré par la figure 1, à l'instant de la fin du 128ème segment du signal vocal original. Ensuite le cycle recommence avec la transmission pendant 30 ms du signal retardé fourni par la sortie du 128ème registre, 46. Le début du premier segment est donc retardé de 256 ms, par rapport au signal original, alors que le début du 128ème segment est retardé de 2 ms, et que le début du premier segment de la trame suivante est retardé de nouveau de 256 ms.

En pratique, ce dispositif est utilisé en outre pour chiffrer le signal vocal. Les moyens de commande 36 modifient l'ordre de transmission des segments raccourcis de signal vocal selon une loi temporelle pseudo-aléatoire, mais ceci ne modifie rien au procédé décrit pour insérer des données. La réalisation des moyens de commande 36 n'est pas plus détaillée car il est à la portée de l'homme de l'art, du domaine de la cryptologie, de réaliser des moyens pour commander des permutations pseudo-aléatoires et pour commander ensuite des permutations permettant de retrouver l'ordre initial des segments.

Il est à noter que si chaque trame de signal composite comporte N segments de signal vocal il suffit de N - 1 registres à décalages dans le dispositif pour extraire les données, alors que N registres sont nécessaires dans le dispositif pour insérer des données.

L'invention ne se limite pas aux exemples de réalisation décrits et représentés ci-dessus, de nombreuses variantes sont à la portée de l'homme de l'art, notamment en modifiant la durée et le nombre des segments ainsi que la durée de l'intervalle de suppression du signal vocal. La durée de chaque paquet de données peut être inférieure à la durée t disponible toutes les T secondes.

L'invention peut être appliquée à la transmission de données sur des voies utilisées classiquement pour la transmission d'un signal vocal, notamment à la transmission de données de synchronisation insérées dans un signal vocal analogique chiffré, quel que soit le type de chiffrement appliqué au signal vocal analogique. Elle peut être appliquée aussi à la transmission de données de signalisation dans une liaison radiotéléphonique. Les données peuvent être transmises sous la forme d'un signal binaire ou bien sous la forme d'un signal à fréquence vocale.

## Revendications

1. Procédé de transmission de données par insertion dans un signal vocal analogique, les données à transmettre étant groupées en paquets de durée t ayant une période T, consistant à:

– découper le signal vocal en segments de durée L fixée;
– raccourcir chaque segment en supprimant le signal vocal pendant une durée

$$p = \frac{t}{N} \, ,$$

N étant un nombre entier tel que p est suffisamment petite pour qu'une interruption du signal vocal pendant une durée p soit peu gênante à l'écoute et la durée L étante telle que:
N.(L–p) = T–t;
caractérisé en ce qu'il consiste, en outre, à:
– transmettre les paquets de données en conservant leur durée t et leur période T;
– entre les paquets de données, transmettre bout à bout N segments raccourcis de signal vocal;
– recevoir puis séparer les données et les segments raccourcis du signal vocal;
– restituer un signal vocal en prolongeant chaque segment raccourci d'une durée p.

2. Dispositif numérique pour insérer dans un signal vocal analogique des paquets de données de période T et de durée t, pour la mise en œuvre du procédé selon la revendication 1, caractérisé en ce qu'il comporte:
– un codeur (5) pour convertir le signal vocal en une suite de bits, à une fréquence d'échantillonnage $f_e$;
– une mémoire vive (6) pour stocker un nombre fixé n de segments de cette suite de bits, chaque segment comportant un nombre fixé B de bits;
– des premiers et des seconds moyens (11 et 13) pour fournir respectivement des suites de n adresses d'écriture de segment dans la mémoire (6) et des suites de n adresses de lecture de segment dans la mémoire (6);
– des troisièmes et des quatrièmes moyens (14 à 17) pour fournir, pour chaque segment, respectivement une suite d'adresses d'écriture et une suite d'adresses de lecture respectivement pour écrire B bits dans la mémoire (6) et y lire (B–b) bits, b étant un nombre entier fixé tel que

$$\frac{b}{f_e}$$

est égale à une durée p suffisamment petite pour qu'une interruption du signal vocal pendant une durée p soit peu gênante à l'écoute;
– des moyens (12) pour coupler les premiers et les seconds moyens (11, 13) à une entrée d'adresse de poids fort, de la mémoire (6), et pour coupler les troisièmes et quatrièmes moyens (14 à 17) à une entrée d'adresse de poids faible, de la mémoire (6);
– des moyens de commande (18) couplés, à une entrée de commande de lecture et d'écriture de la mémoire (6), et aux premiers, seconds, troisièmes, et quatrièmes moyens (11, 13 et 14 à 17) pour commander alternativement l'écriture de B bits consécutifs d'un segment et la lecture de (B–b) bits consécutifs d'un segment; la fréquence de lecture et d'écriture des bits ayant une valeur constante $f_e$;
- un décodeur (7) recevant la suite des bits lus dans la mémoire (6) et restituant un signal analogique;
- un multiplexeur (23) commandé par les moyens de commande (18) pour transmettre vers une borne de sortie (24) alternativement un paquet de données et le signal analogique fourni par le décodeur (7), chaque paquet de données étant transmis pendant l'écriture de n segments dans la mémoire (6) et le signal analogique étant transmis pendant l'écriture des N–n segments suivants, N étant un nombre entier fixé, tel que

$$\frac{N \times b}{f_e} = t \text{ et tel que } \frac{N \times (B - b)}{f_e} = T - t.$$

3. Dispositif numérique pour extraire des données dans un signal vocal, pour la mise en œuvre du procédé selon la revendication 1, un signal reçu étant constitué de trames de période T et comportant chacune un paquet de données de durée t puis une suite de N segments raccourcis du signal vocal de durée totale T–t, chaque segment ayant une durée (L–p) et ayant une durée d'origine L, et la durée p étant telle que N.p = t, caractérisé en ce qu'il comporte:
- un démultiplexeur (3) pour séparer dans le signal reçu les paquets de données et les suites de segments raccourcis du signal vocal;
- un codeur (5) pour convertir chaque segment raccourci en une suite de (B–b) bits, avec une fréquence d'échantillonnage $f_e$, B et b étant des nombres entiers tels que

$$\frac{B}{f_e} = L \text{ et } \frac{b}{f_e} = p \ ;$$

- une mémoire vive (6) pour stocker n suites de (B - b) bits correspondant à n segments, n étant un nombre entier fixé tel que n x L = t ;
- des premiers et des seconds moyens (11 et 13) pour fournir respectivement des suites de n adresses de lecture de segment dans la mémoire (6) et des suites de n adresses d'écriture de segment dans la mémoire (6) ;
- des troisièmes et des quatrièmes moyens (14 à 17) pour fournir respectivement une suite d'adresses d'écriture et une suite d'adresses de lecture respectivement pour écrire (B - b) bits et pour lire (B - b) bits dans la mémoire (6) ;
- des moyens (12) pour coupler les premiers et les seconds moyens (11, 13) à une entrée d'adresse de poids fort, de la mémoire (6), et pour coupler les troisièmes et quatrièmes moyens (14 à 17) à une entrée d'adresse de poids faible, de la mémoire (6) ;
- des moyens de commande (18) couplés au démultiplexeur (3), couplés à une entrée de commande de lecture et d'écriture, de la mémoire (6), et couplés aux premiers, seconds, troisièmes et quatrièmes moyens (11, 13 et 14 à 17), pour commander avec une période (T - t) et une durée (T - t) l'écriture dans la mémoire (6) des (B - b) bits de chaque segment raccourci qui est reçu et pour commander avec une période T et une durée (T - t) la lecture dans la mémoire (6) des (B - b) bits de chaque segment raccourci ;
- un décodeur (7) recevant les bits lus dans la mémoire (6) et restituant, sur une borne de sortie (24) un signal vocal analogique.

4. Dispositif analogique pour insérer dans un signal vocal analogique des paquets de données de période T et de durée t, pour la mise en oeuvre du procédé selon la revendication 1, caractérisé en ce qu'il comporte :
- une mémoire (34) à transfert de charges, constituée de N registres à décalages (45, ... , 46), en série, chaque registre retardant le signal vocal d'un retard p, N étant un nombre entier tel que le retard total N x p procuré par la mémoire (34) soit égal à t, et le retard p étant choisi tel qu'une interruption de durée p du signal vocal est suffisamment petite pour ne pas être gênante à l'écoute ;
- des moyens de multiplexage analogique (37) commandés par des moyens de commande (36) pour transmettre avec une période (L - p) successivement les signaux retardés par les registres (45, ... , 46), dans l'ordre des retards décroissants, chacun étant transmis pendant une durée (L - p) ;
- un multiplexeur (41) commandé par les moyens de commande (36) pour transmettre vers une borne de sortie (42) avec une période T, alternativement un paquet de données pendant une durée t et les signaux retardés transmis par les moyens de multiplexage (37) pendant une durée T - t.

5. Dispositif analogique pour extraire des données et un signal vocal à partir d'un signal reu constitué de trames de période T et comportant chacune un paquet de données de durée t puis une suite de N segments raccourcis du signal vocal, chaque segment ayant une durée (L - p) et ayant une durée d'origine L, pour la mise en oeuvre du procédé selon la revendication 1, caractérisé en ce qu'il comporte :
- un démultiplexeur (35) pour séparer dans le signal reçu les paquets de données et les suites de segments raccourcis de signal vocal ;
- une mémoire (34) à transfert de charges, constituée de N - 1 registres à décalages (45, ... , 46), en série, chaque registre retardant le signal d'une durée p ;
- des moyens de multiplexage (37) pour transmettre successivement avec une période L le signal vocal non retardé puis chaque signal vocal retardé fourni par les registres (46, ... , 47) dans l'ordre des retards croissants, chaque signal étant transmis pendant une durée L - p, un signal de valeur nulle étant transmis pendant une durée p entre chaque intervalle de durée L - p, et la suite de segments ainsi transmise constituant le signal vocal restitué ;
- des moyens de commande (36) pour commander le démultiplexeur (30), les moyens de démultiplexage (37), et la mémoire (34).

6. Dispositif de chiffrement et de déchiffrement d'un signal vocal, caractérisé en ce qu'il comporte un dispositif selon la revendication 2, pour transmettre périodiquement des données de synchronisation insérées dans un signal vocal chiffré et un dispositif selon la revendication 3 pour recevoir périodiquement des données de synchronisation insérées dans un signal vocal chiffré.

7. Dispositif de chiffrement et de déchiffrement d'un signal vocal, caractérisé en ce qu'il comporte un dispositif selon la revendication 4, pour transmettre périodiquement des données de synchronisation insérées dans un signal vocal chiffré et un dispositif selon la revendication 5 pour recevoir périodiquement des données de synchronisation insérées dans un signal vocal chiffré.

**Claims**

1. A method for transmitting data transmission by inserting them to an analogue speech signal, wherein the data to be transmitted are grouped in packages having a duration t and a period T, the method consisting of:
   – cutting the speech signal into segments of a fixed duration L,
   – shortening each segment by way of suppressing the speech signal during a period $p = t/N$, wherein n is an integer such that p is sufficiently short for providing an interruption duration p of the speech signal which is hardly disturbing to the ear, with the duration L being such that:
   $N(L-p) = T-t,$
   characterized in that the method consists, in addition, in:
   – transmitting the data packages while keeping their duration t and their period constant,
   – transmitting N shortened speech signal arranged end to end and inserted between the data packages,
   – receiving and then separating the data and the shortened speech signal segments, and
   – restituting a speech signal by way of extending each shortened segment by a duration p.

2. A digital device for inserting data packages having a period T and a duration t into an analogue speech signal, characterized in that it comprises:
   – an encoder (5) for converting the speech signal into a sequence of bits having a sampling frequency $f_e$,
   – an active memory (6) for storing a fixed number of n segments of said bit sequence, each segment comprising a fixed number B of bits,
   – first and second eans (11 and 13) for supplying respectively sequences of n segment write addresses for writing into the memory (6) sequences of n segment read addresses for reading from the memory (6),
   – third and fourth means (14 through 17) for supplying for each segment respectively a sequence of write addresses and a sequence of read addresses, respectively for writing B bits into the memory (6) and for reading out of it (B–b) bits, with b being an integer fixed such that $b/f_e$ is equal to a period p, which is sufficiently short for providing an interruption of the speech signal during a period p which is hardly disturbing to the ear,
   – means (12) for coupling the first and second means (11, 13) to a high significance addressing input of the memory (6), and for coupling the third and fourth means (14 through 17) to a low significance addressing input of the memory (6),
   – control means (18), coupled to a read and write control input of the memory (6), and to the first, second, third and fourth means (11, 13 and 14 through 17) for controlling alternatively the writing of B consecutive bits of a segment and the reading of (B–b) consecutive bits of a segment, the read and write frequency of the bits having a constant value $f_e$,
   – a decoder (7) receiving the sequence of bits read output of the memory (6) and restituting an analogue signal,
   – a multiplexer (23) controlled by the control means (18) for transmitting alternatively a data package and the analogue signal delivered by the decoder (7) towards an output terminal (24), each data package being transmitted during the time of writing of n segments into the memory (6), and the analogue signal being transmitted during the time of writing (N–n) successivre segments, with N being an integer fixed such that $N.b/f_e=t$ and such that $N.(B-b)/f_e=T-t.$

3. A digital device for extracting data contained in a speech signal, adapted to implement the method according to claim 1, wherein a received signal is constituted of frames having a period T and comprising each a data package of a duration t, and, consecutively, a sequence of N shortened speech segments having a total duration of T–t, each segment having a duration (L–p) and an original duration L and the duration p being chosen such that $N.p=t$, characterized in that the device comprises:
   – a demultiplexer (3) for separating within the received signal the data packages and the shortened segments of the speech signal,
   – an encoder (5) for converting each shortened segment into a sequence of (B–b) bits, having a sampling frequency $f_e$, and B and b being integers such that $B/f_e=L$ and $b/f_e=p$,
   – an active memory (6) for storing n sequences of (B–b) bits corresponding to n segments, with n being an integer such that $n.L=t$,
   – first and second means (11 and 13) for supplying respectively sequences of n segment read addresses for reading from the memory (6) and sequences of n segment write addresses for writing into the memory (6),
   – third and fourth means (14 through 17) for supplying respectively a sequence of write addresses and a sequence of read addresses, respectively for writing (B–b) bits into and for reading (B–b) bits out of the memory (6),
   – means (12) for coupling the first and second means (11, 13) to a high significance addressing input of the memory (6), and for coupling the third and fourth means (14 through 17) to a low order addressing input of the memory (6),
   – control means (18) coupled to the demultiplexer (3), to a read and write control input of the memory (6), and to the first, second, third and fourth means (11, 13 and 14 through 17) for controlling, at a period of (T–t) and a duration of (T–t) the writing of (B–b) bits of each received shortened segment into the memory (6), and for controlling, at a period T and a duration (T–t) the reading of (B–b) bits of each shortened segment out of the memory (6), and
– a decoder (7), receiving the bits read out of the memory (6), and restituting an analogue signal at an output terminal (24).

4. An analogue device for inserting data packages having a period T and a duration t in an analogue speech signal, adapted to implement the method according to claim 1, characterized in that it comprises:
– a charge transfer memory (34), constituted of N shift registers (45, ..., 46), connected in series, each register being adapted to delay the speech signal for a time delay p, with N being an integer such that the total delay N.p provided by the memory (34) is equal to t, the delay p being selected such that an interruption of the speech signal for a time interval p is sufficiently short for not troubling listening,
– analogue multiplexing means (37) controlled by control means (36) for transmitting successively at a period (L–p) the signals delayed by the registers (45, ..., 46), in the order of decreasing delays, each signal being transmitted during an interval of (L–p), and
– a multiplexer (41) controlled by the control means (36) for transmitting to an output terminal (42), and at a period T, alternatively a data package during an interval t and the delayed signals transmitted by the multiplexing means (37) during an interval T–t.

5. An analogue device for extracting data and a speech signal out of a received signal, which is constituted of frames having a period T and comprising each a data package having a duration t, and, consecutively, a sequence of N shortened speech signals, each segment having a duration (L–p) and an original duration L, adapted to implement the method according to claim 1, characterized in that it comprises:
– a demultiplexer (35) for separating within the received signal the data packages and the shortened segments of the speech signals,
– a charge transfer memory (34), constituted of N-1 series connected shift registers (45, ..., 46), each register delaying the signal for a duration of p,
– multiplexing means (37) for successively transmitting, at a period L, the undelayed speech signal and then each delayed speech signal delivered by the registers (46, ..., 47) in the order of increasing delays, each signal being transmitted during an interval L–p, a signal of zero value being transmitted during a period p between each interval L–p, and the sequence of segments transmitted in such a way constituting the restituted speech signal, and
– control means (36) for controlling the demultiplexer (30), the demultiplexing means (37) and the memory (34).

6. A device for encoding end decoding a speech signal, characterized in that it comprises a device according to claim 2 for periodically transmitting synchronization data, which are inserted in an encoded speech signal, and a device according to claim 3 for periodically receiving synchronization data, which are inserted in an encoded speech signal.

7. A device for encoding and decoding a speech signal, characterized in that it comprises a device according to claim 4 for transmitting periodically synchronization data which are inserted in an encoded speech signal, and a device according to claim 5 for receiving periodically synchronization data, which are inserted in an encoded speech signal.

**Patentansprüche**

1. Verfahren zur Übertragung von Daten durch Einfügen derselben in ein analoges Sprachsignal, wobei die zu übertragenden Daten zu Paketen mit einer Dauer T und einer Periode T gruppiert sind und das Verfahren darin besteht, daß:
– das Sprachsignal in Segmente mit einer festgesetzten Dauer L unterteilt wird, - jedes Segment durch Unterdrücken des Sprachsignals während einer Dauer p = t/N verkürzt wird, wobei N eine solche ganze Zahl ist, daß p genügend klein ist, damit eine Unterbrechung des Sprachsignals während einer Dauer p beim Hören wenig stört und die Dauer L so bemessen ist, daß:
N(L–p) = T–t ist,
dadurch gekennzeichnet, daß das Verfahren weiter darin besteht, daß:
– die Datenpakete unter Beibehaltung ihrer Dauer t und ihrer Periode T übertragen werden,
– zwischen den Datenpaketen lückenlos hintereinander N verkürzte Sprachsignalsegmente übertragen werden,
– die Daten und die verkürzten Segmente des Sprachsignals empfangen und getrennt werden, und
– das Sprachsignal durch Verlängern jedes verkürzten Segments um eine Dauer p wiederhergestellt wird.

2. Digitale Vorrichtung zum Einfügen von Datenpaketen mit einer Dauer t und einer Periode T in ein analoges Sprachsignal, ausgelegt zur Durchführung des Verfahrens nach Anspruch 1, dadurch gekennzeichnet, daß die Vorrichtung die folgenden Komponenten aufweist:
– einen Kodierer (5) zum Umwandeln des Sprachsignals in eine Folge von Bits mit einer Tastfrequenz $f_e$,
– einen Aktivspeicher (6) zum Speichern einer festen Anzahl n von Segmenten dieser Bitfolge, wobei jedes Segment eine feste Anzahl B von Bits umfaßt,
– erste und zweite Mittel (11 und 13) zum Liefern von Folgen von n Segment-Schreibadressen bzw. von n Segment-Leseadressen des Speichers (6),

– dritte und vierte Mittel (14 bis 17), um für jedes Segment eine Folge von Schreibadressen bzw. eine Folge von Leseadressen zum Eingeben von B Bits in den Speicher (6) bzw. zum Ausgeben von (B–b) Bits zu liefern, wobei b eine ganze Zahl ist derart, daß b/$f_e$ einer Dauer p entspricht, die genügend klein ist, damit eine Unterbrechung des Sprachsignals während einer Dauer p beim Hören wenig stört,

– Mittel (12) zum Ankoppeln der ersten und zweiten Mittel (11, 13) an einen höherwertigen Adresseneingang des Speichers (6), und zum Ankoppeln der dritten und vierten Mittel (14 bis 17) an einen niederwertigen Adresseneingang des Speichers (6),

– Steuermittel (18), die an einen Lese- und Schreibbefehlseingang des Speichers und an die ersten, zweiten, dritten und vierten Mittel (11, 13 und 14 bis 17) angekoppelt sind, um alternativ das Einschreiben aufeinanderfolgender Bits B eines Segments und das Auslesen von (B–b) aufeinanderfolgender Bits eines Segments zu steuern, wobei die Bitlese- und -schreibfrequenz einen konstanten Wert $f_e$ besitzt,

– einen Dekodierer (7), der die aus dem Speicher (6) ausgelesene Folge von Bits empfängt und daraus ein Analogsignal wiederherstellt,

– einen Multiplexer (23), der von den Befehlsmitteln (18) gesteuert wird und an eine Ausgangsklemme (24) alternativ ein Datenpaket und das vom Dekodierer (7) gelieferte Analogsignal überträgt, wobei jedes Datenpaket während des Einschreibens der n Segmente in den Speicher (6) übertragen wird und das Analogsignal während des Einschreibens der N–n folgenden Segmente übertragen wird und wobei N eine derart festgesetzte ganze Zahl ist, daß N.b/$f_e$=t und N.(B–b)/$f_e$=T–t ist.

3. Digitale Vorrichtung zum Entnehmen von Daten aus einem Sprachsignal, ausgelegt zur Durchführung des Verfahrens gemäß Anspruch 1, wobei ein empfangenes Signal aus Rahmen mit der Periode T besteht und jeder Rahmen ein Datenpaket mit der Dauer t mit daran sich anschließender Folge von N verkürzten Segmenten des Sprachsignals mit der Gesamtdauer T–t aufweist und wobei jedes Segment eine Dauer (L–p) und eine ursprüngliche Dauer L besitzt und die Dauer p so bemessen ist, daß N.p=t gilt, dadurch gekennzeichnet, daß die Vorrichtung die folgenden Komponenten aufweist:

– einen Demultiplexer (3) zum Trennen der Datenpakete und der Folgen der verkürzten Segmente des Sprachsignals im empfangenen Signal,

– eine Kodierer (5) zum Umwandeln jedes verkürzten Segments in eine Folge von (B–b) Bits, mit einer Tastfrequenz $f_e$, wobei B und b ganze Zahlen sind derart, daß B/$f_e$=L und b/$f_e$=p ist,

– einen Aktivspeicher (6) zum Speichern von n Folgen von (B–b) Bits entsprechend n Segmenten, wobei n eine feste Zahl ist derart, daß n.L=t gilt,

– erste und zweite Mittel (11 und 13) zum Liefern von Folgen von n Segment-Schreibadressen bzw. von n Segment-Leseadressen des Speichers (6),

– dritte und vierte Mittel (14 bis 17) zum Liefern einer Folge von Schreibadressen bzw. eine Folge von Leseadressen zum Eingeben von (B–b) Bits in den Speicher (6) bzw. zum Ausgeben von (B–b) Bits aus dem Speicher (6),

– Mittel (12) zum Ankoppeln der ersten und zweiten Mittel (11, 13) an einen höherwertigen Adresseneingang des Speichers (6), und zum Ankoppeln der dritten und vierten Mittel (14 bis 17) an einen niederwertigen Adresseneingang des Speichers (6),

– Steuermittel (18), die an den Demultiplexer (3), an einen Lese- und Schreibbefehlseingang des Speichers (6) und an die ersten, zweiten, dritten und vierten Mittel (11, 13 und 14 bis 17) angeschlossen sind, um mit einer Periode von (T–t) und einer Dauer von (T–t) das Einschreiben von (B–b) Bits jedes empfangenen verkürzten Segmentes in den Speicher (6) zu steuern und um mit einer Periode T während einer Dauer von (T–t) das Auslesen von (B–b) Bits jedes verkürzten Segments aus dem Speicher (6) zu steuern, und

– einen Dekodierer (7), der die aus dem Speicher (6) ausgelesenen Bits empfängt und an einer Ausgangsklemme (24) ein analoges Sprachsignal wiederherstellt.

4. Analoge Vorrichtung zum Einfügen von Datenpaketen mit der Periode T und der Dauer t in ein analoges Sprachsignal, ausgelegt zur Durchführung des Verfahrens nach Anspruch 1, dadurch gekennzeichnet, daß sie folgende Komponenten aufweist:

– einen Ladungstransferspeicher (34), bestehend aus N in Reihe geschalteten Schieberegistern (45, ..., 46), wobei jedes Register das Sprachsignal um eine Verzögerung p verzögert und N eine ganze Zahl ist derart, daß der vom Speicher (34) geschaffene Wert N.p gleich t ist, und wobei die Verzögerung p so gewählt ist, daß eine Unterbrechung des Sprachsignals von der Dauer p genügend klein ist, um beim Hören nicht zu stören,– analoge Multiplexiermittel (37), die von Steuermitteln (36) zur aufeinanderfolgenden Übertragung der durch die Register (45, ..., , 46) verzögerten Signale, in der Reihenfolge abnehmender Verzögerungen, mit einer Periode (L-p) angesteuert werden, wobei jedes Signal während einer Dauer von (L–p) übertragen wird, und

– einen Multiplexer (41), der von den Steuermitteln (36) zur abwechselnden Übertragung eines Datenpakets von der Dauer t und der von den Multiplexiermitteln (37) während einer Dauer von (T–t) übertragenen verzögerten Signale an eine Ausgangsklemme (42), mit einer Periode T.

5. Analoge Vorrichtung zum Entnehmen von Daten und von einem Sprachsignal aus einem empfangenen Signal, das aus Rahmen mit der Periode T besteht und wobei jeder Rahmen ein Datenpaket mit der Dauer t mit daran sich anschließender Folge von N verkürzten Segmenten des Sprachsignals aufweist, wobei jedes Segment eine Dauer von (L–p) bei einer ursprünglichen Dauer von L besitzt, ausgelegt zur Durchführung des Verfahrens nach Anspruch 1, dadurch gekennzeichnet, daß sie folgende Komponenten aufweist:

– einen Demultiplexer (35) zum Trennen der Datenpakete und der Folgen der verkürzten Segmente des Sprachsignals im empfangenen Signal,

– einen Ladungstransferspeicher (34), bestehend aus N–1 in Reihe geschalteten Schieberegistern (45, ..., 46), wobei jedes Register das Sprachsignal um eine Dauer p verzögert,

– Multiplexiermittel (37) zur aufeinanderfolgenden Übertragung des nichtverzögerten Sprachsignals mit einer Periode L und anschließend jedes durch die Register (46, ..., 47) gelieferten verzögerten Sprachsignals in der Reihenfolge abnehmender Verzögerungen, wobei jedes Signal während einer Dauer von L–p und ein Signal mit Wert Null während einer Dauer p zwischen jedem Intervall der Dauer L–p übertragen wird, und wobei die so übertragene Folge von Segmenten das wiederhergestellte Sprachsignal darstellt, und

– Steuermittel (36) zum Ansteuern des Demultiplexers (30), der Demultiplexiermittel (37) und des Speichers (34).

6. Vorrichtung zur Verschlüsselung und Entschlüsselung eines Sprachsignals, dadurch gekennzeichnet, daß es eine Vorrichtung nach Anspruch 2 zum periodischen Übertragen von in ein verschlüsseltes Sprachsignal eingefügten Synchronisierungsdaten und eine Vorrichtung nach Anspruch 3 zum periodischen Empfangen von in ein verschlüsseltes Sprachsignal eingefügten Synchronisierungsdaten aufweist.

7. Vorrichtung zur Verschlüsselung und Entschlüsselung eines Sprachsignals, dadurch gekennzeichnet, daß es eine Vorrichtung nach Anspruch 4 zum periodischen Übertragen von in ein verschlüsseltes Sprachsignal eingefügten Synchronisierungsdaten und eine Vorrichtung nach Anspruch 5 zum periodischen Empfangen von in ein verschlüsseltes Sprachsignal eingefügten Synchronisierungsdaten aufweist.

Fig.1

EP 0 194 186 B1

Fig.2

EP 0 194 186 B1

Fig.3

31

32

33

45 REGISTRE À DÉCALAGE ANALOGIQUE

$F_t$ 34

46 REGISTRE À DÉCALAGE ANALOGIQUE

30

35

ADAPTATEUR DE NIVEAUX

47 MULTIPLEXEUR

48 MULTIPLEXEUR

37

36 MOYENS DE COMMANDE

,3

49 MULTIPLEXEUR

50 MULTIPLEXEUR

,3

51 MULTIPLEXEUR

,2

29 DISPOSITIF DE SYNCHRONI-SATION

38 FILTRE ET ADAPTATEUR DE NIVEAUX

39

43

41

42

EP 0 194 186 B1